# EUROPÄISCHE PATENTSCHRIFT

(11) **EP 2 718 589 B1**
(45) Veröffentlichungstag und Bekanntmachung des Hinweises auf die Patenterteilung: **08.07.2015**
(21) Anmeldenummer: 12713074.8
(22) Anmeldetag: 28.03.2012
(51) Int. Cl.: F16H 7/08

(54) **SPANNVORRICHTUNG FÜR EIN ZUGMITTEL**
TENSIONING DEVICE FOR A TRACTION MEANS
DISPOSITIF TENDEUR POUR UN MOYEN DE TRACTION

(30) Priorität: 07.06.2011 DE 102011077025
(43) Veröffentlichungstag der Anmeldung: 16.04.2014
(73) Patentinhaber: Schaeffler Technologies AG & Co. KG, 91074 Herzogenaurach (DE)
(72) Erfinder: PFLUG, Rainer, 91560 Heilsbronn (DE)
(86) Internationale Anmeldenummer: PCT/EP2012/055549
(87) Internationale Veröffentlichungsnummer: WO 2012/167964

(56) Entgegenhaltungen:
- DE-A1- 10 141 654
- DE-A1- 19 955 642
- US-A- 4 917 655
- US-A- 5 470 279

## Beschreibung

Die Erfindung betrifft eine Spannvorrichtung für ein Zugmittel, mit einer Exzenterbuchse, die an ihrer Innenmantelfläche schwenkbar gelagert ist, einem Wälzlager und einer Spannrolle, die mittels des Wälzlagers drehbar auf der Exzenterbuchse gelagert ist. Dabei ist ein Innenring des Wälzlagers auf einer exzentrisch zur Innenmantelfläche verlaufenden Außenmantelfläche der Exzenterbuchse mittels eines Pressverbands befestigt.

### Hintergrund der Erfindung

Derartige Spannvorrichtungen sind insbesondere als Zahnriemenspanner für den Steuertrieb einer Brennkraftmaschine bekannt, wo sie in Einfach- oder Doppelexzenterbauweise mit einem betrieblich verschwenkenden, federkraftbeaufschlagten Arbeitsexzenter bzw. zusätzlich mit einem starr an der Brennkraftmaschine ausgerichteten Einstellexzenter den Zahnriemen vorspannen.

Aufgrund der gegenseitigen Exzentrizität von Innenmantelfläche und Außenmantelfläche besitzt die Exzenterbuchse eine lokal so geringe Wandstärke, dass diese im Hinblick auf den Pressverband mit dem Innenring des Wälzlagers eine konstruktive Problemstelle darstellen kann. Denn die für einen betrieblich stabilen Pressverband erforderliche Fugenpressung ist unter Berücksichtigung der üblichen Passungstoleranzen und thermischen Differenzdehnungen zwischen der Exzenterbuchse und dem Innenring des Wälzlagers auszuwählen. Dabei kann die real tatsächlich auftretende Streuung bzw. betriebliche Änderung der Fugenpressung in Verbindung mit der hohen Elastizität der lokal "geschwächten" Exzenterbuchse und der Elastizität des Innenrings zu einer unzulässig hohen Radialspielveränderung im Wälzlager und auch im Gleitlager führen, das üblicherweise in der Innenmantelfläche eingesetzt ist und zur Schwenklagerung der Exzenterbuchse dient.

Zur Entschärfung dieser Problematik - insbesondere soll ein durch die Radialspielveränderung hervorgerufenes Klemmen der Lagerstellen verhindert werden - ist es in der DE 101 41 654 A1 vorgeschlagen, die Exzenterbuchse im Bereich ihrer geringsten radialen Wandstärke mit einem Längsschlitz zu versehen. Der Längsschlitz soll bewirken, dass die am Umfang entsprechend offene Exzenterbuchse eine solche Elastizität aufweist, dass die vorgenannten Streuungen und thermisch bedingten Änderungen der Fugenpressung durch federndes Aufspreizen oder Zusammenziehen des Schlitzes nivelliert werden. Dieser Ansatz führt jedoch in der Praxis nicht zum gewünschten Ergebnis, da die Exzenterbuchse infolge des Längsschlitzes zu elastisch ist, um einen stabilen Pressverband über der geforderten Lebensdauer der Spannvorrichtung gewährleisten zu können.

### Aufgabe der Erfindung

Aufgabe der vorliegenden Erfindung ist es daher, eine Spannvorrichtung der eingangs genannten Art im Hinblick auf den Pressverband zwischen der Exzenterbuchse und dem Wälzlager-Innenring konstruktiv zu verbessern.

### Zusammenfassung der Erfindung

Die Lösung dieser Aufgabe ergibt sich aus den kennzeichnenden Merkmalen des Anspruchs 1, während vorteilhafte Weiterbildungen und Ausgestaltungen der Erfindung den abhängigen Ansprüchen entnehmbar sind. Demnach soll die Exzenterbuchse so gestaltet sein, dass deren Außenmantelfläche in einem Umfangsbereich, innerhalb dessen die Außenmantelfläche maximal zur Innenmantelfläche hin exzentriert ist, von der Zylinderform abweicht und gegenüber dem zugehörigen Hüllzylinder radial zurückspringt. Mit anderen Worten soll die Exzenterbuchse im Bereich ihrer geringsten Wandstärke nicht am Pressverband teilnehmen, so dass mangels Fugenpressungen der dünnwandige Umfangsbereich der Exzenterbuchse nicht deformiert und es dort zu keiner unzulässig hohen Radialspielveränderung im Wälzlager und/oder im Gleitlager kommt.

Der von der Zylinderform abweichende Umfangsbereich kann vielfältigste Geometrien annehmen. Beispielsweise kann der Umfangsbereich der Außenmantelfläche exzentrisch zu dessen Hüllzylinder mit einem demgegenüber größeren Radius verlaufen. Alternativ kann der von der Zylinderform abweichende Umfangsbereich der Außenmantelfläche konzentrisch zu dessen Hüllzylinder mit einem demgegenüber kleineren Radius verlaufen.

Vorzugsweise handelt es sich bei der Exzenterbuchse um ein im Urformverfahren hergestelltes Bauteil und insbesondere um ein Aluminium-Druckgussteil. Alternativ kann es sich auch um ein Kunststoffteil handeln. Im Hinblick auf niedrige Herstellkosten soll dabei zumindest der von der Zylinderform abweichende Umfangsbereich der Außenmantelfläche frei von spanender Nacharbeit hergestellt sein. Eine hohe Kosteneinsparung ergibt sich dann, wenn die gesamte Außenmantelfläche frei von spanender Nacharbeit hergestellt ist und die sich im Druckgussbzw. Kunststoffspitzgussprozess ergebende Oberfläche den Pressverband für den Wälzlager-Innenring bildet. Die lokale Entlastung des Pressverbands im dünnwandigen Bereich der Exzenterbuchse bewirkt gegenüber einer vollzylindrischen Außenmantelfläche, dass Streuungen in der Fugenpressung in erhöhtem Maße toleriert werden, so dass bei einer Gussoberfläche mit entsprechend ausreichender Qualität die spanende (Fein-)Bearbeitung zugunsten deutlich niedrigerer Herstellkosten entfallen kann. Idealerweise sind auch die anderen Funktionsflächen, d.h. die gesamte Exzenterbuchse einschließlich der Innenmantelfläche frei von spanender Nacharbeit hergestellt.

### Kurze Beschreibung der Zeichnungen

Weitere Merkmale der Erfindung ergeben sich aus der nachfolgenden Beschreibung und aus den Zeichnungen, in denen Ausführungsbeispiele der Erfindung dargestellt sind. Sofern nicht anders erwähnt, sind dabei gleiche oder funktionsgleiche Merkmale oder Bauteile mit gleichen Bezugszahlen versehen. Es zeigen:
- Figur 1: eine Exzenterbuchse einer erfindungsgemäßen Spannvorrichtung in perspektivischer Darstellung;
- Figuren 2: jeweils in schematischer Vordersicht ein Ausführungsbeispiel für den von der Zylinderform abweichenden Umfangsbereich der Exzenterbuchse und
- Figur 3: eine bekannte Spannvorrichtung in Form eines Zahnriemenspanners in Doppelexzenterbauweise.

### Ausführliche Beschreibung der Zeichnungen

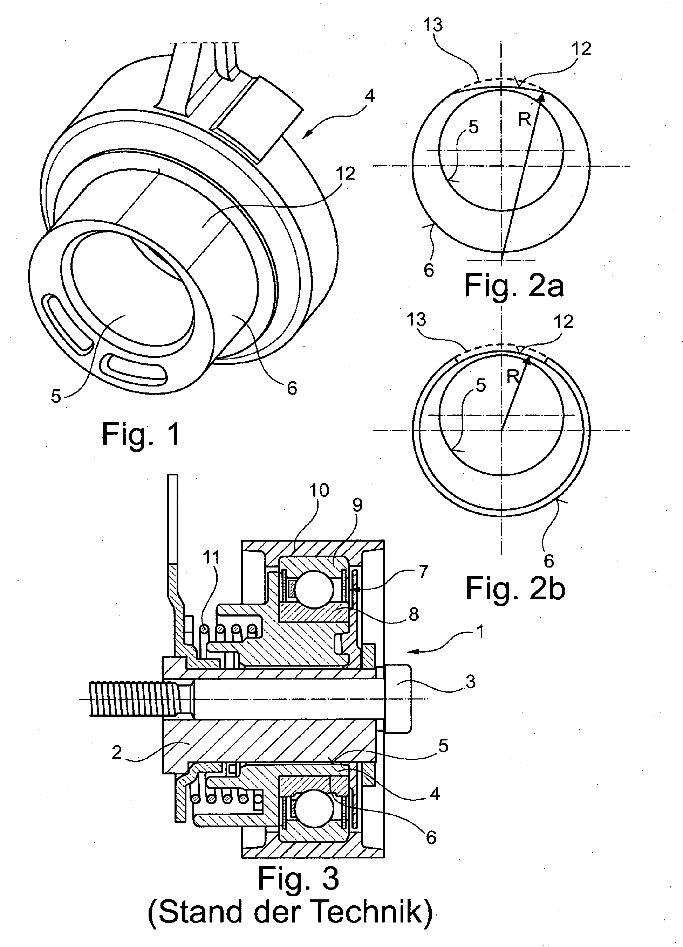

Die Erfindung sei zum besseren Verständnis von Figur 3 ausgehend erläutert, in der eine bekannte Spannvorrichtung 1 in Form eines Zahnriemenspanners für einen (nicht dargestellten) Zahnriemen-Steuertrieb einer Brennkraftmaschine dargestellt ist. Der als Doppelexzenter ausgeführte Zahnriemenspanner 1 umfasst einen Einstellexzenter 2, der in einer starren Grundeinstellung mittels einer den Einstellexzenter 2 durchsetzenden Befestigungsschraube 3 am Motorblock der Brennkraftmaschine befestigt wird, und einen Arbeitsexzenter 4 in Form einer Exzenterbuchse, deren Innenmantelfläche 5 zur betrieblich schwenkbaren Gleitlagerung des Arbeitsexzenters 4 auf dem Einstellexzenter 2 dient. Eine zur Innenmantelfläche 5 exzentrische Außenmantelfläche 6 der Exzenterbuchse 4 dient als Lagersitz für ein Wälzlager 7 in Form eines einreihigen Kugellagers, dessen Innenring 8 auf der Außenmantelfläche 6 aufgepresst ist und dessen Außenring 9 mit einer den Zahnriemen spannenden Rolle 10 fest verbunden ist. Die Riemenvorspannung wird durch eine zwischen dem Einstellexzenter 2 und dem Arbeitsexzenter 4 eingespannte Drehfeder 11 erzeugt.

Eine erfindungsgemäße Exzenterbuchse 4 ist in Figur 1 perspektivisch dargestellt. Deren Außenmantelfläche 6 ist in dem dünnwandigen Umfangsbereich 12, innerhalb dessen die Außenmantelfläche 6 maximal zur Innenmantelfläche 5 hin exzentriert ist, von der Zylinderform abweichend gestaltet, so dass dieser Umfangsbereich 12 nicht am Pressverband mit dem Wälzlager-Innenring 8 (siehe Figur 3) teilnimmt. Wie oben erläutert, verhindert die lokal fehlende Fugenpressung eine unzulässig hohe Deformation des dünnwandigen Umfangsbereichs 12 und folglich eine bis hin zum Klemmen führende Radialspielveränderung im Wälzlager 7 und/oder im Gleitlager. Abweichend zu der bekannten Spannvorrichtung 1 in Figur 3 ist bei der erfindungsgemäßen Exzenterbuchse 4 eine separate (nicht dargestellte) Gleitlagerbuchse vorgesehen, die in der Innenmantelfläche 5 eingesetzt ist. Bei der Exzenterbuchse 4 handelt es sich um ein Aluminium-Druckgussteil, wobei die den Pressverband mit dem Wälzlager-Innenring 8 bildende Außenmantelfläche 6 vollständig frei von spanender Nacharbeit hergestellt ist und dementsprechend (lediglich) Druckgussqualität aufweist.

Die Figuren 2 sind schematisch illustrierte Beispiele, auf welche geometrische Weise die Außenmantelfläche 6 in dem dünnwandigen Umfangsbereich 12 von der Zylinderform abweichen, d.h. gegenüber dem gestrichelt dargestellten Hüllzylinder 13 der Außenmantelfläche 6 radial zurückspringen kann.

Gemäß Figur 2a folgt der Umfangsbereich 12 einem Kreisbogen, der gegenüber dem Hüllzylinder 13 exzentrisch ist und einen größeren Radius R aufweist. Ein Extremfall dieser Geometrie kann ein vollständig abgeflachter Umfangsbereich - entsprechend einer unendlich großen Exzentrizität und einem unendlich großen Radius R - sein. Der Umfangsbereich ist dann eine (ebene) Anflachung.

Figur 2b entspricht der in Figur 1 gezeigten Ausgestaltung der Exzenterbuchse 4. Dabei folgt der Umfangsbereich 12 einem Kreisbogen, der zum Hüllzylinder 13 konzentrisch ist und einen kleineren Radius R aufweist. Anders als bei der Geometrie in Figur 2a springt in diesem Fall der Umfangsbereich 12 gegenüber dem Hüllzylinder 13 radial gestuft zurück.

### Liste der Bezugszahlen

- 1: Spannvorrichtung
- 2: Einstellexzenter
- 3: Befestigungsschraube
- 4: Arbeitsexzenter / Exzenterbuchse
- 5: Innenmantelfläche der Exzenterbuchse
- 6: Außenmantelfläche der Exzenterbuchse
- 7: Wälzlager
- 8: Wälzlager-Innenring
- 9: Wälzlager-Außenring
- 10: Spannrolle
- 11: Drehfeder
- 12: dünnwandiger Umfangsbereich
- 13: Hüllzylinder

## Patentansprüche

1. Spannvorrichtung für ein Zugmittel, mit einer Exzenterbuchse (4), die an ihrer Innenmantelfläche (5) schwenkbar gelagert ist, einem Wälzlager (7) und einer Spannrolle (10), die mittels des Wälzlagers (7) drehbar auf der Exzenterbuchse (4) gelagert ist, wobei ein Innenring (8) des Wälzlagers (7) auf einer exzentrisch zur Innenmantelfläche (5) verlaufenden Außenmantelfläche (6) der Exzenterbuchse (4) mittels eines Pressverbands befestigt ist, **dadurch gekennzeichnet, dass** die Außenmantelfläche (6) in einem Umfangsbereich (12), innerhalb dessen die Außenmantelfläche (6) maximal zur Innenmantelfläche (5) hin exzentriert ist, von der Zylinderform abweicht und gegenüber dem zugehörigen Hüllzylinder (13) radial zurückspringt.

2. Spannvorrichtung nach Anspruch 1, **dadurch gekennzeichnet, dass** der von der Zylinderform abweichende Umfangsbereich (12) der Außenmantelfläche (6) exzentrisch zu deren Hüllzylinder (13) mit einem demgegenüber größeren Radius (R) oder einer Anflachung verläuft.

3. Spannvorrichtung nach Anspruch 1, **dadurch gekennzeichnet, dass** der von der Zylinderform abweichende Umfangsbereich (12) der Außenmantelfläche (6) konzentrisch zu deren Hüllzylinder (13) mit einem demgegenüber kleineren Radius (R) verläuft.

4. Spannvorrichtung nach Anspruch 1, **dadurch gekennzeichnet, dass** es sich bei der Exzenterbuchse (4) um ein Urformteil handelt, wobei der von der Zylinderform abweichende Umfangsbereich (12) der Außenmantelfläche (6) frei von spanender Nacharbeit hergestellt ist.

5. Spannvorrichtung nach Anspruch 4, **dadurch gekennzeichnet, dass** es sich bei der Exzenterbuchse (4) um ein Druckgussteil aus Aluminiumwerkstoff oder um ein Kunststoffteil handelt, wobei die gesamte Außenmantelfläche (6) frei von spanender Nacharbeit hergestellt ist.

6. Spannvorrichtung nach Anspruch 5, **dadurch gekennzeichnet, dass** die gesamte Exzenterbuchse (4) frei von spanender Nacharbeit hergestellt ist.

## Claims

1. Tensioning apparatus for a fraction mechanism, having an eccentric bushing (4) which is mounted in pivotable fashion at its inner shell surface (5), having a rolling bearing (7), and having a tensioning roller (10) which is mounted rotatably on the eccentric bushing (4) by means of the rolling bearing (7), wherein an inner ring (8) of the rolling bearing (7) is fastened on an outer shell surface (6), which runs eccentrically with respect to the inner shell surface (5), of the eccentric bushing (4) by way of an interference fit, **characterized in that**, in a circumferential region (12) within which the outer shell surface (6) comes closest to the inner shell surface (5) owing to the eccentricity, the outer shell surface (6) deviates from the cylindrical shape and is radially set back in relation to the associated cylindrical envelope (13).

2. Tensioning apparatus according to Claim 1, **characterized in that** that circumferential region (12) of the outer shell surface (6) which deviates from the cylindrical form runs eccentrically with respect to the cylindrical envelope (13) of said outer shell surface with a larger radius (R), or a flattening, in relation to said cylindrical envelope.

3. Tensioning apparatus according to Claim 1, **characterized in that** that circumferential region (12) of the outer shell surface (6) which deviates from the cylindrical shape runs concentrically with respect to the cylindrical envelope (13) of said outer shell surface with a smaller radius (R) in relation to said cylindrical envelope.

4. Tensioning apparatus according to Claim 1, **characterized in that** the eccentric bushing (4) is a part produced by primary forming, wherein that circumferential region (12) of the outer shell surface (6) which deviates from the cylindrical shape is produced without cutting reworking processes.

5. Tensioning apparatus according to Claim 4, **characterized in that** the eccentric bushing (4) is a die-cast part composed of aluminium material or is a plastics part, wherein the entire outer shell surface (6) is produced without cutting reworking processes.

6. Tensioning apparatus according to Claim 5, **characterized in that** the entire eccentric bushing (4) is produced without cutting reworking processes.

## Revendications

1. Dispositif tendeur pour un moyen de traction, comprenant une douille excentrique (4) qui est supportée de manière pivotante au niveau de sa surface d'enveloppe intérieure (5), un palier à roulement (7) et un rouleau tendeur (10) qui est supporté au moyen du palier à roulement (7) de manière rotative sur la douille excentrique (4), une bague interne (8) du palier à roulement (7) étant fixée sur une surface d'enveloppe extérieure (6) de la douille excentrique (4), s'étendant de manière excentrique par rapport à la surface d'enveloppe intérieure (5), au moyen d'un assemblage par pressage, **caractérisé en ce que** la surface d'enveloppe extérieure (6), dans une région périphérique (12) à l'intérieur de laquelle la surface d'enveloppe extérieure (6) est excentrée au maximum vers la surface d'enveloppe intérieure (5), s'écarte de la forme cylindrique et est en retrait radialement par rapport au cylindre d'enveloppe associé (13).

2. Dispositif tendeur selon la revendication 1, **caractérisé en ce que** la région périphérique (12) de la surface d'enveloppe extérieure (6), s'écartant de la forme cylindrique, s'étend de manière excentrique par rapport à son cylindre d'enveloppe (13) avec un rayon (R) supérieur par rapport à celui-ci ou avec un méplat.

3. Dispositif tendeur selon la revendication 1, **caractérisé en ce que** la région périphérique (12) de la surface d'enveloppe extérieure (6), s'écartant de la forme cylindrique, s'étend de manière concentrique par rapport à son cylindre d'enveloppe (13) avec un rayon (R) inférieur par rapport à celui-ci.

4. Dispositif tendeur selon la revendication 1, **caractérisé en ce que** la douille excentrique (4) est une pièce de formage primaire, la région périphérique (12) de la surface d'enveloppe extérieure (6), s'écartant de la forme cylindrique, étant fabriquée sans post-usinage par enlèvement de copeaux.

5. Dispositif tendeur selon la revendication 4, **caractérisé en ce que** la douille excentrique (4) est une pièce moulée sous pression en matériau à base d'aluminium ou est une pièce en plastique, l'ensemble de la surface d'enveloppe extérieure (6) étant fabriqué sans post-usinage par enlèvement de copeaux.

6. Dispositif tendeur selon la revendication 5, **caractérisé en ce que** l'ensemble de la douille excentrique (4) est fabriqué sans post-usinage par enlèvement de copeaux.
